# EUROPÄISCHE PATENTSCHRIFT

(11) **EP 0 665 195 B1**
(45) Veröffentlichungstag und Bekanntmachung des Hinweises auf die Patenterteilung: **15.04.1998**
(21) Anmeldenummer: 95101008.1
(22) Anmeldetag: 26.01.1995
(51) Int. Cl.: C04B 28/14, C04B 28/16

(54) **Leichtmörtel und seine Verwendung**
Lightweight mortar and use thereof
Mortier léger et son utilisation

(30) Priorität: 29.01.1994 DE 4402645
(43) Veröffentlichungstag der Anmeldung: 02.08.1995
(73) Patentinhaber: Gebr. Knauf Westdeutsche Gipswerke KG, D-97343 Iphofen (DE)
(72) Erfinder: Kumar, René, Dr. Dipl.-Chem., D-97318 Kitzingen (DE); Berneth, Claus-Peter, Dr. Dipl.-Chem., D-97340 Marktbreit (DE)
(74) Vertreter: Werner, Hans-Karsten, Dr.Dipl.-Chem.

(56) Entgegenhaltungen:
- DE-A- 2 356 637
- DE-A- 3 524 115
- FR-A- 2 657 103
- GB-A- 1 503 725
- PATENT ABSTRACTS OF JAPAN vol. 014 no. 096 (C-0692) ,22.Februar 1990 & JP-A-01 305840 (MARUSEN KAGAKU KK;OTHERS: 01) 11.Dezember 1989,
- CHEMICAL ABSTRACTS, vol. 104, no. 18, 5.Mai 1986 Columbus, Ohio, US; abstract no. 154681, TAKADA, IZUMI ET AL 'Mortar compositions' & JP-A-60 215 587 (KIKUSUI KAGAKU KOGYO CO., LTD., JAPAN)
- DATABASE WPI Section Ch, Week 8201 Derwent Publications Ltd., London, GB; Class A93, AN 82-00807E & JP-A-56 155 056 ( YAMASO KK) , 1.Dezember 1981
- CHEMICAL ABSTRACTS, vol. 86, no. 24, 13.Juni 1977 Columbus, Ohio, US; abstract no. 176006w, & JP-A-52 018 728 (FUJIKAWA KENZAI KOGYO K.K. ) 12.Februar 1977

## Beschreibung

Gegenstand der vorliegenden Erfindung ist ein Leichtmörtel auf der Basis von Gips, Zement oder Mischungen derselben, bestehend aus dem Bindemittel und einem Leichtzuschlag sowie gegebenenfalls Zusätzen wie inerten Füllern, Abbindereglern und Fließmitteln, Verfahren zur Herstellung dieses Leichtmörtels sowie seine Verwendung zur Dämmung, Isolierung, zum Ausgleich von Unebenheiten und Ausfüllen von Hohlräumen im Innenausbau sowie zur Herstellung von Bauelementen, wobei bei geeigneter Kombination der Bindemittel der Leichtmörtel selbsttrocknend und nach 24 Stunden belegereif ist.

Es ist bekannt, Leichtmörtel auf Gipsbasis herzustellen, welche als Bindemittel β-Halbhydrat, als Leichtzuschlag Perlite sowie gegebenenfalls Zusätze wie inerte Füller, Abbinderegler und Fließmittel enthalten. Außerdem werden Zementmörtel im Außenbereich verwendet, die zur Erhöhung der Dämmwirkung Leichtzuschlag enthalten. Leichtmörtel werden im allgemeinen zum Verputzen von Wänden eingesetzt und enthalten viel Bindemittel und wenig Leichtzuschlag. Zur effektiven Dämmung und Isolierung sowie zum Ausgleich von Unebenheiten und zum Ausfüllen von Hohlräumen im Innenausbau muß dagegen möglichst viel Leichtzuschlag eingebracht werden.

Die DE-C-40 09 906 beschreibt die Verwendung einer Trockenmischung aus hydrophobiertem mineralischem Schüttgut, geblähtem Perlite, Bims, Schaumglas, Lava, Blähton oder geblähtem Vermiculit und 60 bis 90 Gew.-% eines abbindefähigen Calciumsulfatträgers zur Herstellung einer Ausgleichsschicht unter Estrichen. Es fehlen aber Angaben über die Korngröße. Vorzugsweise wird als Calciumsulfatträger Stuckgips und/oder α-Halbhydrat erwähnt, jedoch ohne jegliche Angabe der Korngröße.

Die GB-PS 1,585,659 sieht es als wesentlich an, daß in dem fertig abgebundenen Produkt zwischen den Polystyrolkugeln das abgebundene Calciumsulfat nicht in der Lage ist, die Hohlräume komplett auszufüllen. Dies ist eine Frage der Menge des Bindemittels, bezogen auf die Menge der Polystyrolkugeln, und nicht eine Frage der Korngröße.

Die DE-A-21 29 942 beschreibt wasserabbindende Massen aus gebranntem Gips oder Portlandzement sowie zerfaserten oder zerkleinerten geblähten Polystyrolzuschlagstoffen. Dabei soll der Zuschlagstoff nur 0,01 bis 5 Gew.-% der Masse ausmachen. Es findet sich kein Hinweis darauf, daß die Art des verwendeten Calciumsulfats sowie dessen Korngröße und Korngrößenverteilung von entscheidender Bedeutung für die Eigenschaften der daraus entstehenden Produkte ist.

Die DD-PS 63 320 beschreibt Leichtbaukörper aus Gips und Anhydrit, die eine Porenstruktur aufweisen, in deren Zellgrößen geschäumte Polystyrol-Perlteile oder zerkleinerte Polystyrolschaum-Abfälle eingebettet sind. Es fehlen Hinweise auf die Art des Gipses und die Bedeutung von dessen Korngröße und Korngrößenverteilung.

Gewünscht werden Rohdichten < 1.000 kg/m³, vorzugsweise sogar < 500 kg/m³, wobei dennoch Druckfestigkeiten > 0,1 N/mm², vorzugsweise sogar > 0,2 N/mm² gewünscht werden. Die Biegezugfestigkeit sollte > 0,1 N/mm², vorzugsweise > 0,2 N/mm² betragen. Die Wärmeleitfähigkeit sollte < 0,5 W/mK, vorzugsweise < 0,25 W/mK betragen. Schließlich wird gefordert, daß ein derartiger Leichtmörtel möglichst schnell und schwindneutral abbindet.

Da ein derartiges Material bisher nicht zur Verfügung stand, wurden hier früher vorgefertigte Bauteile wie Styroporplatten, Mineralwollplatten etc. hergestellt. Der Einbau wird aber unwirtschaftlich, wenn die Platten nicht am Stück verarbeitet werden können, beispielsweise, wenn bei der Fußbodendämmung Leitungen für Wasser, Heizung, Strom etc. auf der Rohdecke verlegt sind und die Platten in paßgerechte Stücke geschnitten werden müssen. Das gleiche gilt, wenn Unebenheiten auszugleichen oder Hohlräume auszufüllen sind, z.B. bei der Sanierung alter Holzbalkendecken, bei denen vom Fehlboden bis zum Niveauausgleich oft mehrere Dezimeter Ausgleichsschicht aufzubringen sind. Teilweise wurde in solchen Fällen mit Schüttungen gearbeitet, deren Nachteil jedoch ist, daß sie sich nachverdichten bzw. ein völlig dichter Untergrund notwendig ist, und daß sie nur mit flächigen Elementen abgedeckt werden können. Der Einbau eines Estrichs aus Mörtel ist hierauf praktisch nicht möglich. Es ist auch schon mit Leichtmörtel auf Basis von Portland- oder Hochofenzement als Bindemittel gearbeitet worden. Diese Leichtmörtel auf einer derartigen Bindemittelbasis sind zwar nach dem Erhärten begehbar und erlauben dann den Einbau eines Estrichs. Dennoch benötigt die Aushärtung mehrere Tage und ist darüber hinaus von einem Schwindprozeß begleitet. Schließlich verläuft die Austrocknung schon bei Schichtdicken von wenigen Zentimetern relativ langsam, bei Schichtdicken von 10 cm und mehr beansprucht sie mehrere Monate. Bei zu schnellem Austrocknen geringer Schichtdicken kann der Zement nicht hinreichend abbinden, so daß die Festigkeiten deutlich reduziert sind. Zudem werden insbesondere Holzbalken oder ähnlich empfindliche Bauteile aufgrund der langsamen Austrocknungszeit zu lange mit Feuchtigkeit belastet, was zu Faul- und Verformungsprozessen und somit zu Schäden führen kann.

Die Erfindung hat sich die Aufgabe gestellt, Leichtmörtel zur Verfügung zu stellen, welche alle oben genannten Forderungen erfüllen, nicht die Nachteile der bisherigen verwendeten Materialien aufweisen und dennoch leicht und preiswert sind und zuverlässig verarbeitet werden können.

Diese Aufgabe konnte jetzt gelöst werden durch Leichtmörtel auf Gips- oder Zementbasis, bestehend aus Bindemittel und einem Leichtzuschlag sowie gegebenenfalls Zusätzen wie inerten Füllern, Abbindereglern und Fließmitteln, welche dadurch gekennzeichnet sind, daß das Bindemittel zu 85 % eine Korngröße von < 63 µm aufweist und aus α-Gips, synthetischem Anhydrit, Gemischen derselben oder aus einem Gemisch aus 60 - 80 % Tonerdeschmelzzement, 20- 30 % α-Gips und 0 - 15 % Portlandzement besteht, und daß der Leichtzuschlag Styropor und/oder Schaumglas ist.

Ein besonderer Vorteil des neuen Leichtmörtels auf der Basis von Calciumsulfat ist, daß er schwindfrei abbindet, während der erfindungsgemäße Leichtmörtel mit dem Bindemittelgemisch aus Tonerdeschmelzzement und Gips schnell abbindet und unabhängig von der Schichtdicke innerhalb von 24 Sunden belegereif ist. Darüber hinaus zeichnen sich die Leichtmörtel dadurch aus, daß hierfür auch Styropor und/oder Schaumglas aus Recyclingprozessen verwendet werden kann, welches in kompakter, gedrungener Kornform mit einem Durchmesser < 8 mm vorliegt.

Der Leichtmörtel wird hergestellt, indem ein Bindemittel, welches zu 85 % eine Korngröße < 63 µm aufweist, aus α-Gips, synthetischem Anhydrit, Gemischen derselben oder aus einem Gemisch aus 60 - 80 % Tonerdeschmelzzement, 20 - 30 % α-Gips und 0 - 15 % Portlandzement besteht und gegebenenfalls Zusätze wie inerte Füller, Abbinderegler und Fließmittel enthält, mit der notwendigen Menge Anmachwasser angerührt und dann mit dem Leichtzuschlag Styropor und/oder Schaumglas vermischt wird.

Es ist zwar prinzipiell möglich, das Bindemittel schon vor dem Anrühren mit dem Anmachwasser mit dem Leichtzuschlag zu vermischen, jedoch erschwert dies das Anrühren mit Wasser, zumal Gemische aus Bindemittel und Leichtzuschlag unterschiedliche Korngrößen und spezifische Gewichte aufweisen und deshalb zur Entmischung neigen.

Sofern Styropor zum Einsatz kommt, welches nicht aus Recyclingprozessen stammt, ist ebenfalls eine maximale Korngröße von 8 mm zu beachten.

Als inerter Füller kommt insbesondere Kalkstein in Frage mit Korngrößen Zwischen 0 und 1 mm. Hiervon können ohne weiteres bis zu 20 % zugemischt werden, was die Verarbeitbarkeit des Mörtels verbessert. Diese Füller haben den weiteren Vorteil, daß sie zur Selbstreinigung der eingesetzten Maschinen dienen.

Als Abbinderegler kommen insbesondere die üblichen Abbindeverzögerer in Frage. Besonders geeignet sind gewisse organische Säuren sowie Eiweiß bzw. Proteinhydrolysate. Gelegentlich lassen sich auch optimale Abbindezeiten erreichen durch gleichzeitigen Zusatz von Abbindeverzögerern und Abbindebeschleunigern.

Als Fließmittel kommen vor allem oberflächenaktive Zusätze in Frage, z.B. sulfonierte Polykondensationsprodukte auf Melaminbasis sowie entschäumende Zusätze.

Je nach Anforderungen an Dichte, Dämmung und mechanische Eigenschaften werden die erfindungsgemäßen Leichtmörtel hergestellt aus ca. 100 l Leichtzuschlag mit 40 bis 80 kg Bindemittel. Das Wasser-Bindemittelverhältnis liegt dabei unter 0,4, vorzugsweise sogar unter 0,3. Je niedriger das Wasser-Bindemittelverhältnis ist, um so fester ist der abgebundene Gips oder der Zement. Außerdem vermindert es die durch Trocknung wieder zu entfernende Feuchtigkeit.

Die erfindungsgemäßen Leichtmörtel auf Gipsbasis sind in der Lage, schon in wenigen Stunden zu mehr als 90 % abzubinden. Sie erhärten dabei schwindfrei und können ohne Festigkeitseinbußen sofort getrocknet werden. Die Leichtmörtel auf Basis des Bindemittelgemisches aus Tonerdeschmelzzement und Gips binden ebenfalls innerhalb weniger Stunden so weit ab, daß sie begehbar sind. Das Anmachwasser wird innerhalb von 24 Stunden chemisch soweit gebunden, daß danach die Leichtmörtel belegereif sind.

Als Bindemittel für den gipshaltigen Leichtmörtel besonders geeignet sind α-Gips und synthetischer Anhydrit, die mit geringer Wasserzugabe verarbeitbar sind und daher sehr hohe Festigkeiten erreichen. Besonders bewährt hat sich α-Gips aus Rauchgasgips, welcher hergestellt ist im kontinuierlichen Autoklaven und so vermahlen ist, daß mindestens 85 % < 63µm Korngröße aufweist. Geeignet ist ebenfalls aus Rauchgasgips im Trägergasverfahren erbrannter Anhydrit, der entsprechend feinvermahlen ist. Zur optimalen Einstellung des Leichtmörtels kann es vorteilhaft sein, Gemische aus α-Gips und Anhydrit einzusetzen. Auch die Kombination aus 60 - 80 % Tonerdeschmelzzement, 20 - 30 % α-Gips und 0 - 15 % Portlandzement ist in der Lage, unabhängig von der Schichtdicke innerhalb von 24 Stunden durch Hydratation zur Belegereife auszutrocknen.

Die Abbinderegler sind im allgemeinen so zu wählen, daß der Mörtel mindestens 20 min., vorzugsweise 60 min. verarbeitbar ist, dann jedoch rasch abbindet und schnell aushärtet.

Versuche mit β-Halbhydrat verschiedener Korngrößen als auch mit α-Halbhydrat und Anhydrit, die nicht ausreichend feinvermahlen sind, haben ergeben, daß hieraus Produkte entstehen, die nicht die gewünschten Anforderungen erfüllen.

Der erfindungsgemäße Leichtmörtel ist vor allem gut verarbeitbar in Maschinen, welche die drei Komponenten Bindemittel, Leichtzuschlag und Wasser regulierbar zusammenmischen. Das fertig angerührte Gemisch kann dann in üblicher Weise transportiert und verarbeitet werden. Der Leichtmörtel kann für jede Art von Dämmung, Isolierung, Ausgleich von Unebenheiten, Ausfüllen von Hohlräumen im gesamten Innenausbau sowie zur Herstellung von Bauelementen verwendet werden. Besonders vorteilhaft ist der Einsatz des Mörtels bei der Fußbodendämmung zwischen den auf dem Rohboden verlegten Leitungen sowie im Ausgleich größerer Unebenheiten unter dem Estrich sowie zum Verfüllen von Mauerschlitzen für Installations- und Abwasserleitungen.

## Patentansprüche

1. Leichtmörtel auf Gips- oder Zementbasis, bestehend aus einem Bindemittel und einem Leichtzuschlag sowie gegebenenfalls Zusätzen wie inerten Füllern, Abbindereglern und Fließmitteln, dadurch gekennzeichnet, daß das Bindemittel zu 85 % eine Korngröße < 63 µm aufweist und aus α-Gips, synthetischem Anhydrit, Gemischen derselben oder aus einem Gemisch aus 60 - 80 % Tonerdeschmelzzement, 20 - 30 % α-Gips und 0 - 15 % Portlandzement besteht, und daß der Leichtzuschlag Styropor und/oder Schaumglas ist.

2. Leichtmörtel gemäß Anspruch 1, dadurch gekennzeichnet, daß Styropor aus Recyclingprozessen verwendet wird in kompakter, gedrungener Kornform mit einem Durchmesser < 8 mm.

3. Leichtmörtel gemäß Anspruch 1, dadurch gekennzeichnet, daß Schaumglas verwendet wird in kompakter, gedrungener Kornform mit einem Durchmesser < 8 mm.

4. Verfahren zur Herstellung eines Leichtmörtels auf Gips- oder Zementbasis und einem Leichtzuschlag sowie gegebenenfalls Zusätzen, wie inerten Füllern, Abbindereglern und Fließmitteln, dadurch gekennzeichnet, daß ein Bindemittel, welches zu 85 % eine Korngröße < 63 µm aufweist, aus α-Gips, synthetischem Anhydrit, Gemischen derselben oder aus einem Gemisch aus 60 - 80 % Tonerdeschmelzzement, 20 - 30 % α-Gips und 0 - 15 % Portlandzement besteht und gegebenenfalls Zusätze, wie inerte Füller, Abbinderegler und Fließmittel enthält, mit der notwendigen Menge Anmachwasser angerührt und dann mit dem Leichtzuschlag Styropor und/oder Schaumglas vermischt wird.

5. Verfahren gemäß Anspruch 4, dadurch gekennzeichnet, daß Styropor aus Recyclingprozessen verwendet wird in kompakter, gedrungener Kornform mit einem Durchmesser < 8 mm.

6. Verfahren gemäß Anspruch 4, dadurch gekennzeichnet, daß Schaumglas verwendet wird in kompakter, gedrungener Kornform mit einem Durchmesser < 8 mm.

7. Verwendung eines Leichtmörtels auf Gipsbasis oder Zement gemäß einem der Ansprüche 1 bis 3 zur Dämmung, Isolierung, zum Ausgleich von Unebenheiten und zum Ausfüllen von Hohlräumen im Innenausbau und zur Herstellung von Bauelementen.

## Claims

1. A gypsum or cement based light-weight mortar, consisting of a binder and a light-weight aggregate and optionally additives such as inert fillers, quick-setting agents and flowing agents, characterized in that 85% of said binder has a grain size of < 63 µm and said binder consists of α-gypsum, synthetic anhydrite, mixtures thereof, or a mixture of 60 to 80% of aluminous cement, 20 to 30% of α-gypsum and 0 to 15% of Portland cement, and said light-weight aggregate is polystyrene foam and/or glass foam.

2. The light-weight mortar according to claim 1, characterized in that polystyrene foam from recycling processes is used in a compact grain shape with a diameter of < 8 mm.

3. The light-weight mortar according to claim 1, characterized in that glass foam is used in a compact grain shape with a diameter of < 8 mm.

4. A process for the preparation of a light-weight mortar based on gypsum or cement and a light-weight aggregate and optionally additives such as inert fillers, quick-setting agents and flowing agents, characterized in that a binder, 85% of which has a grain size of < 63 µm, consisting of α-gypsum, synthetic anhydrite, mixtures thereof, or of a mixture of 60 to 80% of aluminous cement, 20 to 30% of α-gypsum and 0 to 15% of Portland cement, and optionally containing additives such as inert fillers, quick-setting agents and flowing agents, is mixed with the necessary amount of tempering water and then with the light-weight aggregate, i.e. polystyrene foam and/or glass foam.

5. The process according to claim 4, characterized in that polystyrene foam from recycling processes is used in a compact grain shape with a diameter of < 8 mm.

6. The process according to claim 4, characterized in that glass foam is used in a compact grain shape with a diameter of < 8 mm.

7. Use of a gypsum or cement based light-weight mortar according to any of claims 1 to 3 for insulating, for levelling out unevennesses and for filling cavities in the completion of the interior and for the preparation of construction elements.

## Revendications

1. Mortier léger à base de plâtre ou de ciment, comprenant un liant et un agrégat léger, et, éventuellement, des additifs, comme des charges inertes, des régulateurs de prise et des fluidifiants, caractérisé en ce que 85 % des grains du liant ont une dimension < 63 µm, ledit liant étant formé de gypse α, d'anhydrite synthétique, de mélanges de ceux-ci ou d'un mélange de 60 à 80 % de ciment alumineux fondu, 20 à 30 % de gypse α et 0 à 15 % de ciment de Portland, et en ce que l'agrégat léger est du Styropor et/ou un verre mousse.

2. Mortier léger selon la revendication 1, caractérisé en ce qu'on utilise du Styropor provenant de procédés de recyclage sous la forme de grains solides compacts ayant un diamètre < 8 mm.

3. Mortier léger selon la revendication 1, caractérisé en ce qu'on utilise un verre mousse sous la forme de grains solides compacts ayant un diamètre < 8 mm.

4. Procédé d'obtention d'un mortier léger à base de plâtre ou de ciment et d'un agrégat léger, ainsi que, éventuellement, des additifs, comme des charges inertes, des régulateurs de prise et des fluidifiants, caractérisé en ce qu'on délaie un liant, dont 85 % des grains présentent une dimension < 63 µm, formé de gypse α, d'anhydrite synthétique, de mélanges de ceux-ci ou d'un mélange de 60 à 80 % de ciment alumineux fondu, 20 à 30 % de gypse α et 0 à 15 % de ciment de Portland, et, éventuellement, des additifs, comme des charges inertes, des régulateurs de prise et des fluidifiants, avec la quantité nécessaire d'eau à gâcher, et, ensuite, on le mélange avec l'agrégat léger constitué de Styropor et/ou de verre mousse.

5. Procédé selon la revendication 4, caractérisé en ce qu'on utilise du Styropor provenant de procédés de recyclage sous la forme de grains solides compacts ayant un diamètre < 8 mm.

6. Procédé selon la revendication 4, caractérisé en ce qu'on utilise un verre mousse sous la forme de grains solides compacts ayant un diamètre < 8 mm.

7. Utilisation d'un mortier léger à base de plâtre ou de ciment selon l'une des revendications 1 à 3 pour l'isolation thermique et phonique, pour la compensation de creux et de bosses et pour le remplissage d'espaces vides dans une construction en intérieur et pour la fabrication d'éléments de construction.
